Europäisches Patentamt

European Patent Office

Office européen des brevets

(11) Veröffentlichungsnummer: **0 353 441**

**A2**

## (12) EUROPÄISCHE PATENTANMELDUNG

(21) Anmeldenummer: **89111255.9**

(22) Anmeldetag: **21.06.89**

(51) Int. Cl.4: **H01R 4/42 , H02G 3/16**

(30) Priorität: **30.07.88 DE 3826080**

(43) Veröffentlichungstag der Anmeldung:
**07.02.90 Patentblatt 90/06**

(84) Benannte Vertragsstaaten:
**AT BE CH DE ES FR GB GR IT LI LU NL SE**

(71) Anmelder: **Kurt Wolf & Co. KG**
**Langwiesenweg 67/71**
**D-7547 Wildbad(DE)**

(72) Erfinder: **Wolf, Kurt**
**Langwiesenweg 67**
**D-7547 Wildbad(DE)**

(74) Vertreter: **Vogel, Georg**
**Pat.-Ing. Georg Vogel**
**Hermann-Essig-Strasse 35**
**D-7141 Schwieberdingen(DE)**

(54) **Antennensteckdose.**

(57) Die Erfindung betrifft eine Antennensteckdose für hohe Frequenzen mit einem topfförmigen Dosenkörper aus Metall, dessen Wandung Aussparungen zur Einführung der antennenseitigen Anschlußkabel besitzt und in dem ein Anschluß- und Klemmstück mit Öffnungen für diese Anschlußkabel angeordnet ist. Das Anschluß- und Klemmstückteil ist ein am Dosenkörper angeformtes und wandseitig offenes Gehäuse, in das ein Isolierkörper mit in Kontaktplatten auslaufenden anschlußstiften für eine Leiterplatte einsetzbar ist. Der Isolierkörper besitzt über den Kontaktplatten zum Gehäuse hin offene Bohrungen für im Gehäuse verschraubbare Spannschrauben mit Isolierteilen sowie in diese Bohrungen mündende und mit den Öffnungen für die Anschlußkabel des Gehäuses kommunizierende Bohrungen, in die die abisolierten Enden der Anschlußkabel einsteckbar und mittels den Isolierteilen mit den Kontaktplatten der Anschlußstifte elektrisch leitend verbindbar sind.

FIG.1

Die Erfindung betrifft eine Antennensteckdose für hohe Frequenzen mit einem topfförmigen Dosenkörper aus Metall, dessen Wandung Aussparungen zur Einführung der antennenseitigen Anschlußkabel besitzt und in dem ein Anschluß- und Klemmstück mit Öffnungen für diese Anschlußkabel angeordnet ist.

In Antennensteckdosen der eingangs genannten Art werden sowohl antennenseitige als auch empfängerseitige koaxiale Anschlüsse hergestellt. Für Empfängeranschlüsse sind koaxiale Stecker vorgesehen, während die antennenseitigen Anschlüsse mittels Anschluß- und Klemmstücken mit dem Dosenkörper lösbar verbindbar sind. Solche Antennensteckdosen sind nur bedingt für hohe Frequenzen tauglich. Dies ergibt sich insbesondere aus der Tatsache, daß die Kapazität der antennenseitigen Anschlüsse sehr hoch ist. Ein weiterer Nachteil, mit dem die herkömmlichen Antennensteckdosen, wie sie z.B. in der DE 35 30 721 A1 beschrieben sind, behaftet sind, besteht darin, daß die für die Herstellung antennenseitiger Anschlüsse vorgesehenen Anschluß- und Klemmstücke aus einer Vielzahl von Einzelteilen bestehen, wodurch die Herstellung der antennenseitigen Anschlüsse nicht nur erschwert, sondern auch zeitaufwendig wird.

Ausgehend von dem obigen Stand der Technik liegt der Erfindung die Aufgabe zugrunde, die gattungsgemäße Antennensteckdose ohne unangemessenen konstruktiven Aufwand so weiterzubilden, daß unter Vereinfachung der Ausbildung des Anschluß- und Klemmstückes die Übertragung hoher Frequenzen verbessert wird.

Die gestellte Aufgabe wird erfindungsgemäß dadurch gelöst, daß das Anschluß- und Klemmstück ein am Dosenkörper angeformtes und wandseitig offenes Gehäuse ist, in das ein Isolierkörper mit in Kontaktplatten auslaufenden Anschlußstiften für eine Leiterplatte einsetzbar ist, der über den Kontaktplatten zum Gehäuse hin offene Bohrungen für im Gehäuse verschraubbare Spannschrauben mit Isolierteilen sowie in diese Bohrungen mündende und mit den Öffnungen für die Anschlußkabel des Gehäuses kommunizierende Bohrungen besitzt, in die die abisolierten Enden der Anschlußkabel einsteckbar und mittels den Isolierteilen mit den Kontaktplatten der Anschlußstifte elektrisch leitend verbindbar sind.

Man erkennt, daß die Erfindung jedenfalls dann verwirklicht ist, wenn das Anschluß- und Klemmstück als ein Teil ausgebildet, bei dem die Verbindung zwischen einer Leiterplatte und dem antennenseitigen Anschlußkabel mittels eines Isolierkörpers mit Anschlußstiften herstellbar ist, der von der Bodenseite des Dosenkörpers in die Antennensteckdose einsteckbar ist.

Weitere zweckmäßige und vorteilhafte Ausgestaltungen der Erfindung gehen aus den Unteransprüchen hervor.

Bezüglich der Herstellung der Antennensteckdose ist es besonders zweckmäßig, wenn das Gehäuse quaderförmig und der Isolierkörper komplementär zum Innenraum des Gehäuses ausgebildet ist.

Eine weitere zweckmäßige Ausgestaltung der Erfindung sieht vor, daß die Spannschrauben die Deckseite des Gehäuses durchqueren und daß die Bohrungen des Gehäuses Gewinde für die Spannschrauben aufweisen. Hierbei können diese Maßnahmen auch so getroffen sein, daß der Isolierkörper eine quer zu den Bohrungen für die Spannschrauben verlaufende Bohrung besitzt, in die ein die Wand des Gehäuses durchquerender Arretierstift einsteckbar ist. Die Spannschrauben dienen dazu, die abisolierten Enden der Anschlußkabel gegen die Anschlußstifte zu drücken, während durch den Arretierstift eine feste Verbindung zwischen dem Gehäuse und dem Isolierkörper herstellbar ist. Der Arretierstift erstreckt sich quer zu den Längsachsen der Spannschrauben, um den von den Spannschrauben auf den Isolierkörper ausübenden Druck auffangen zu können. Hierbei ist es besonders zweckmäßig, wenn der Arretierstift sowohl den Isolierkörper als auch das Gehäuse durchquert.

Bezüglich der Herstellung der Antennensteckdose ist es besonders zweckmäßig, wenn das Gehäuse und der Dosenkörper einstückig ausgebildet sind.

Eine weitere zweckmäßige Ausgestaltung der Erfindung sieht vor, daß jede der Spannschrauben aus einem Gewindeteil und einem mit dem Ende des Anschlußkabels in Druckverbindung stehenden Isolierteil besteht. Im Rahmen dieses Erfindungsgedankens ist es zweckmäßig, wenn das Isolierteil einen in eine Sacklochbohrung des Gewindeteiles hineinragenden Abschnitt besitzt und wenn das Isolierteil und das Gewindeteil gegeneinander verdrehbar sind. Dadurch wird erreicht, daß das Isolierteil auf das abisolierte Ende des Anschlußkabels Kräfte ausübt, die sich nur in axialer Richtung der Spannschrauben erstrecken. Da das Isolierteil den Drehbewegungen des Gewindeteils nicht folgt, wird auch das Ende des Anschlußkabels nicht verdreht.

Schließlich sieht eine zweckmäßige Ausgestaltung der Erfindung vor, daß das Gewindeteil einen radialseitigen Dichtring trägt, der zwischen dem Gewindeteil und dem Isolierkörper angeordnet ist.

Ein Ausführungsbeispiel der Erfindung ist in der Zeichnung schematisch dargestellt und wird im folgenden näher erläutert. Es zeigen:

Fig. 1 einen Dosenkörper einer Antennensteckdose in perspektivischer Seitenansicht,

Fig. 2 den in Fig. 1 dargestellten Dosenkörper in Draufsicht und

Fig. 3 einen Schnitt entlang der Linie III-III nach Fig. 2.

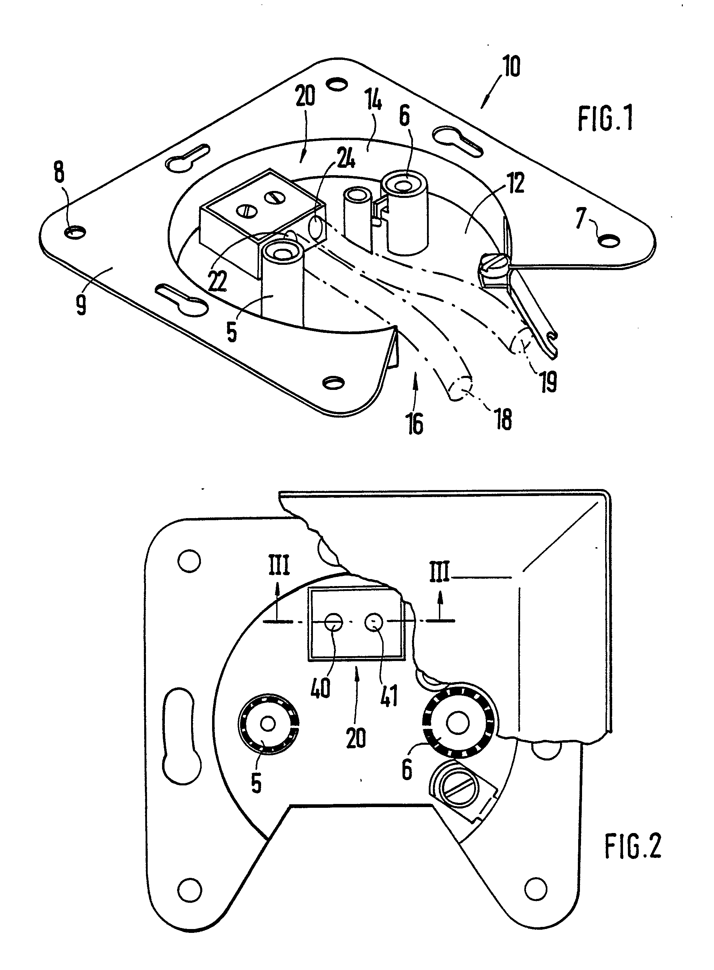

In den Fig. 1 und 2 ist eine Antennensteckdose für hohe Frequenzen mit einem topfförmigen Dosenkörper 10 dargestellt, dessen Boden 12 und Wandung 14 Aussparungen 16 zur Einführung der antennenseitigen Anschlußkabel 18 und 19 und ein Anschluß- und Klemmstück 20 mit Öffnungen 22 und 24 für diese Anschlußkabel 18 und 19 besitzt. Der Dosenkörper 10 kann aus einem tiefgezogenen Blechteil bestehen. An seiner offenen Seite weist der Dosenkörper 10 einen den Topf kranzartig umgebenden Tragring 9 auf, in dem Verbindungsbohrungen 7 und 8 ausgebildet sind. Zum empfangsseitigen Anschluß dienen zwei koaxiale Anschlußbuchsen 5 und 6.

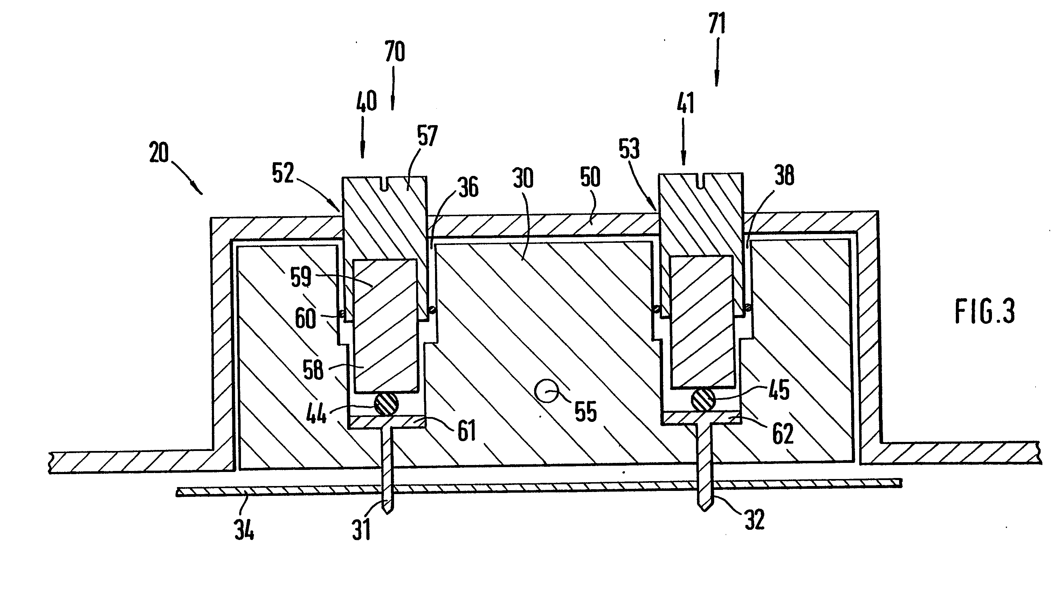

Wie insbesondere die Fig. 3 erkennen läßt, besteht das Anschluß- und Klemmstück 20 aus einem wandseitig offenen Gehäuse, in das ein Isolierkörper 30 mit Anschlußstiften 31 und 32 für eine Leiterplatte 34 einsteckbar ist, der zum Gehäuse hin offene Bohrungen 36 und 38 für das Gehäuse durchquerende Spannschrauben 40 und 41 sowie mit diesen Bohrungen 36 und 38 und mit den Öffnungen 22 und 24 für die Anschlußkabel 18 und 19 des Gehäuses kommunizierende Bohrungen besitzt. In diese Bohrungen sind die abisolierten Enden 44 und 45 der Anschlußkabel 18 und 19 einsteckbar und mit den Anschlußstiften 31 und 32 durch die Spannschrauben 40 und 41 elektrisch leitend verbindbar. Die Anschlußstifte 31 und 32 besitzen jeweils eine Kontaktplatte 61 und 62, die auf den Böden der Bohrungen 36 und 38 satt aufliegen. Wird nun in Richtung der Pfeile 70 und 71 Druck auf die abisolierten Enden 44 und 45 ausgeübt, dann werden diese gegen die Kontaktplatten 61 und 62 unter Herstellung einer elektrischen Verbindung gedrückt.

Man erkennt, daß das Gehäuse quaderförmig und der Isolierkörper 30 komplementär zum Innenraum des Gehäuses ausgebildet ist. Die Spannschrauben 40 und 41 durchqueren die Deckseite 50 des Gehäuses. Die Bohrungen 52 und 53 des Gehäuses weisen Gewinde für die Spannschrauben 40 und 41 auf.

Der Isolierkörper 30 besitzt eine quer zu den Bohrungen 52 und 53 für die Spannschrauben 40 und 41 verlaufende Bohrung 55, in die ein die Wand des Gehäuses durchquerender Arretierstift einsteckbar ist. Der Arretierstift durchquert sowohl den Isolierkörper 30 als auch das Gehäuse.

Wie insbesondere Fig. 3 erkennen läßt, sind das Gehäuse und der Dosenkörper 10 einstückig ausgebildet. Ferner läßt die Fig. 3 erkennen, daß die Spannschraube 40 aus einem metallenen Gewindeteil 57 und einem mit dem Ende 44 des Anschlußkabels 18 in Druckverbindung stehenden Isolierteil besteht. Das Isolierteil 58 besitzt einen in eine Sacklochbohrung des Gewindeteils 57 hineinragenden Abschnitt 59, so daß das Isolierteil 58 und das Gewindeteil 57 gegeneinander verdrehbar sind. In gleicher Weise ist auch die Spannschraube 41 ausgebildet. Das Gewindeteil 57 trägt einen radialseitigen Dichtring 60, der zwischen dem Gewindeteil 57 und dem Isolierkörper 30 angeordnet ist.

## Ansprüche

1. Antennensteckdose für hohe Frequenzen mit einem topfförmigen Dosenkörper aus Metall, dessen Wandung Aussparungen zur Einführung der antennenseitigen Anschlußkabel besitzt und in dem ein Anschluß- und Klemmstück mit Öffnungen für diese Anschlußkabel angeordnet ist,
dadurch gekennzeichnet,
daß das Anschluß- und Klemmstückteil (20) ein am Dosenkörper (10) angeformtes und wandseitig offenes Gehäuse ist, in das ein Isolierkörper (30) mit in Kontaktplatten (61,62) auslaufenden Anschlußstiften (31,32) für eine Leiterplatte (34) einsetzbar ist, der über den Kontaktplatten (61,62) zum Gehäuse hin offene Bohrungen (36,38) für im Gehäuse verschraubbare Spannschrauben (40,41) mit Isolierteilen (58) sowie in diese Bohrungen (36,38) mündende und mit den Öffnungen (22,24) für die Anschlußkabel (18,19) des Gehäuses kommunizierende Bohrungen besitzt, in die die abisolierten Enden (44,45) der Anschlußkabel (18,19) einsteckbar und mittels den Isolierteilen (58) mit den Kontaktplatten (61,62) der Anschlußstifte (31,32) elektrisch leitend verbindbar sind.

2. Antennensteckdose nach Anspruch 1,
dadurch gekennzeichnet,
daß das Gehäuse quaderförmig und der Isolierkörper (30) komplementär zum Innenraum des Gehäuses ausgebildet ist.

3. Antennensteckdose nach Anspruch 1 oder 2,
dadurch gekennzeichnet,
daß die Spannschrauben (40,41) die Deckseite (50) des Gehäuses durchqueren und
daß die Bohrungen (52,53) des Gehäuses Gewinde für die Spannschrauben (40,41) aufweisen.

4. Antennensteckdose nach einem der Ansprüche 1 bis 3,
dadurch gekennzeichnet,
daß der Isolierkörper (30) eine quer zu den Bohrungen (52,53) für die Spannschrauben (40,41) verlaufende Bohrung (55) besitzt, in die ein die Wand des Gehäuses durchquerender Arretierstift einsteckbar ist.

5. Antennensteckdose nach Anspruch 4,
dadurch gekennzeichnet,
daß der Arretierstift sowohl den Isolierkörper (30) als auch das Gehäuse durchquert:

6. Antennensteckdose nach einem der Ansprüche 1 bis 5,
dadurch gekennzeichnet,
daß das Gehäuse und der Dosenkörper (10) einstückig ausgebildet sind.

7. Antennensteckdose nach einem der Ansprüche 1 bis 6,
dadurch gekennzeichnet,
daß das Isolierteil (58) einen in eine Sacklochbohrung des Gewindeteiles (57) der Spannschraube
(40) hineinragenden Abschnitt (59) besitzt und daß
das Isolierteil (58) und das Gewindeteil (57) gegeneinander verdrehbar sind.

8. Antennensteckdose nach einem der Ansprüche 1 bis 7,
dadurch gekennzeichnet,
daß das Gewindeteil (57) einen radialseitigen Dichtungsring (60) trägt, der zwischen dem Gewindeteil
(57) und dem Isolierkörper (30) angeordnet ist.

EP 0 353 441 A2

FIG.1

FIG.2

FIG.3

EP 0 353 441 A2